# EUROPÄISCHE PATENTSCHRIFT

(11) **EP 1 295 760 B1**
(45) Veröffentlichungstag und Bekanntmachung des Hinweises auf die Patenterteilung: **09.11.2005**
(21) Anmeldenummer: 02015421.7
(22) Anmeldetag: 11.07.2002
(51) Int. Cl.: B60R 21/045

(54) **Kniestütze für Kraftfahrzeuge**
Knee restraint for motor vehicles
Protège-genoux pour véhicules automobiles

(30) Priorität: 21.09.2001 DE 10146494
(43) Veröffentlichungstag der Anmeldung: 26.03.2003
(73) Patentinhaber: Dr.Ing. h.c.F. Porsche Aktiengesellschaft, 70435 Stuttgart (DE)
(72) Erfinder: Horsch, Guido, 75382 Althengstett (DE); Remensperger, Rolf, 88512 Mengen (DE); Zierle, Matthias, 70794 Filderstadt (DE); Frank, Martin, 75417 Mühlacker (DE)

(56) Entgegenhaltungen:
- US-A- 5 037 130
- US-A- 5 273 314
- US-A- 5 577 770
- US-A- 6 086 098
- US-B1- 6 170 872

## Beschreibung

Die Erfindung bezieht sich auf eine Kniestütze für Kraftfahrzeuge, die innerhalb eines Aufbaus des Kraftfahrzeugs im Bereich einer Schalttafel angeordnet ist, nach dem Oberbegriff des Patentanspruchs 1.

Es ist eine Kniestütze bekannt - US 4,709,943 -, die in ein Kraftfahrzeug eingebaut ist, von einer Stützwand einer Schalttafel verkleidet wird und einen Stoßaufnahmeträger aufweist. Der Stoßaufnahmeträger ist über Halteelemente an einen Querträger angeschlossen, der mit seitlichen Rahmenstrukturen verbunden ist. Zwischen dem Stoßaufnahmeträger und den Halteelementen sind Stoßenergie absorbierende Einrichtungen vorgesehen.

In der US 5,273,314 wird eine vergleichbare Kniestütze mit einem Deformationselement behandelt, das sich in Fahrzeuglängsrichtung gesehen von der Stützwand der Schalttafel bis zum Querträger erstreckt. Das Deformationselement ist nach Art eines Trägers ausgeführt und weist beabstandete Trägerwände auf, die durch Stege miteinander verbunden sind. Die Dicke der Tragwände und der Stege ist unterschiedlich d.h. sie nimmt von der Stützwand aus bis zum Querträger hin zu.

Aus dem Dokument US 5,577,770 A1 ist eine Kniestütze nach dem Oberbegriff des Anspruchs 1 bekannt.

Aufgabe der Erfindung ist es, ein Deformationselement einer Kniestütze so zu verbessern, dass sie hohe Verformarbeit bei einer definierten Kollision leistet und sich dabei wirkungsvoll am Aufbau abstützt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass durch die Gestaltung der Hohlträgerabschnitte und ihre Anordnung zueinander ein Deformationselement geschaffen ist, das zum weitgehenden Schutz der benachbart der Schalttafel sitzenden Insassen des Kraftfahrzeugs gezielt Verformungsenergie aufnimmt. Dabei sind beide Hohlträgerabschnitte kompakt ausgeführt und lassen sich hinter der Schalttafel in üblicherweise beengten Verhältnissen mit vertretbarem Aufwand unterbringen. Der Verlauf der Trägerwände und der Stege der Hohlträgerabschnitte unterstützt ein funktionsgerechtes Verformungsverhalten des Deformationselements. Der erste und der zweite Hohlträgerabschnitt sind zu einem Bauteil zusammengefasst, das bspw. aus Leichtmetall besteht und durch Strangpressen hergestellt ist. Es besteht aber auch die Möglichkeit besagte Hohlträgerabschnitte mehrteilig auszubilden bzw. für sie einen anderen geeigneten Werkstoff auszuwählen. Schließlich wird die Wirkung des Deformationselements noch dadurch optimiert, dass der Querträger, an dem der zweite Hohlträgerabschnitt befestigt ist, zur Energieaufnahme bei einer havariebedingten Verformung der Deformationselements beiträgt.

In der Zeichnung wird ein Ausführungsbeispiel der Erfindung gezeigt, das nachstehend näher erläutert wird.

Es zeigen
- Fig. 1: einen Teillängsschnitt eines Kraftfahrzeugs im Bereich einer Schalttafel mit der Kniestütze nach der Erfindung,
- Fig. 2: eine Einzelheit X der Fig.1 als Schrägansicht und in verkleinertem Maßstab, Fig. 3 eine Teilansicht der Fig.1,
- Fig. 4: eine Teilansicht der Fig.1 mit einer weiteren Ausführungsform,
- Fig. 5: eine Schrägansicht eines Querträgers der Kniestütze mit Deformationselementen nach der Erfindung.

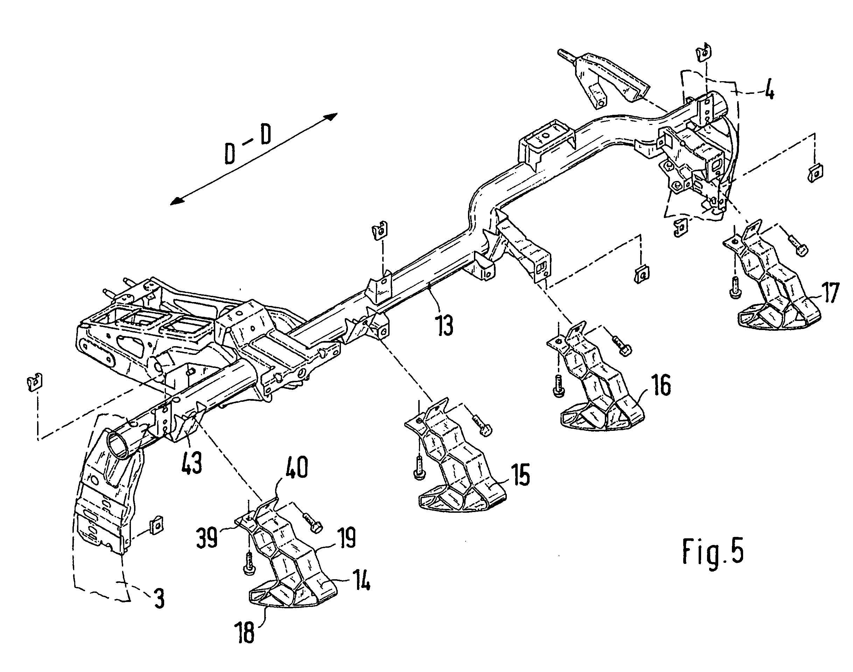

Von einem Kraftfahrzeug, z.B. der Personenkraftwagen-Gattung, ist lediglich eine Schalttafel 1 dargestellt, die sich quer zur Fahrzeuglängsrichtung A-A in einem Fahrgastraum 2 zwischen festen seitlichen Aufbaustrukturen 3,4 - Fig. 5 bspw. A-Säulen - erstrecken. Die Schalttafel 1 umfasst einen Winkelrahmen 5, der auf der dem Fahrgastraum 2 zugewandten Seite 6 mit einer Polsterung 7 versehen ist. Im Querschnitt gesehen weist der Winkelrahmen 5 einen unteren im Winkel α von ca. 27° bis 32° zu einer Horizontalen 8 verlaufenden sowie entgegen der Fahrtrichtung B ansteigenden als Stützwand 9 ausgebildeten Schenkel 10 und einen oberen in Fahrtrichtung B nach oben gerichteten Schenkel 11 auf; die Schenkel 10 und 11 schließen einen Winkel β von etwa 97° ein. Ungefähr bei C, d.h. am Übergang zwischen Schenkel 10 und Schenkel 11, ist die Schalttafel 1 bzw. ihre Stützwand 9 auf Knie K von Insassen ausgerichtet, die Platz auf Vordersitzen des Kraftfahrzeugs eingenommen haben; letzteres ist nicht dargestellt.

In Fahrtrichtung B gesehen vor der Schalttafel 2 ist eine Kniestütze 12 mit einem Querträger 13 angeordnet, der an den seitlichen Aufbaustrukturen 3,4 gehalten ist. Der Querträger 13 der Kniestütze 12 ist mit Deformationselementen 14,15,16,17 versehen, die bei einer unfallbedingten Havarie des Kraftfahrzeugs, die Knie der Insassen abstützen und vor allem die Energie des Knieaufpralls absorbieren, dergestalt, dass die von C ausgehende Kniekraft innerhalb gegebener Werte bleibt. Im Ausführungsbeispiel sind fahrerseitig und beifahrerseitig je zwei Deformationselemente 14,15 bzw. 16,17 angeordnet, und zwar bspw. - in Fahrzeugquerrichtung D-D gesehen - jeweils seitlich außerhalb einer konstruktiv definierten Lage der Knie des Fahrers und des Beifahrers. Andere Arten der Anordnung der Deformationselemente sind jedoch auch denkbar.

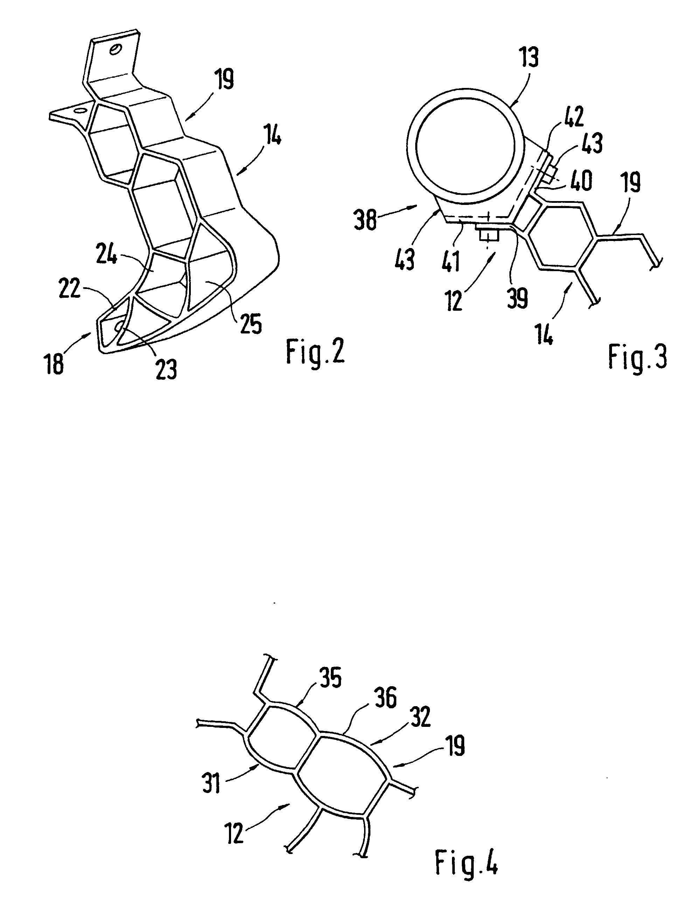

Jedes Deformationselement z.B. 14 weist einen ersten entlang der Stützwand 9 der Schalttafel 1 verlaufenden Hohlträgerabschnitt 18 und einen zweiten zusätzlichen Hohlträgerabschnitt 19 auf, die beide Gebilde zur definierten Deformation darstellen. Der zweite Hohlträgerabschnitt 18 ist am Querträger 13 der Kniestütze 12 befestigt. Der erste Hohlträgerabschnitt 18 erstreckt sich entlang der Stützwand 9. Dabei verläuft eine als ebene oder konvexe Fläche ausgeführte erste Trägerwand 20 des ersten Hohlträgerabschnitts 18 mit etwa gleichem Abstand zur Stützwand 9, und sie begrenzt Hohlträger 21,22,23,24. Eine zweite Trägerwand 25 des ersten Hohlträgerabschnitts 18 ist beabstandet zur ersten Trägerwand 20 angeordnet, zwischen denen im Winkel zueinander verlaufende Stege 26,27,28, die eine Art Diagonalverrippung bilden, vorgesehen sind; sie bilden bereichsweise die Hohlträger 21,22,23,24. Der zweite Hohlträgerabschnitt 19 ist von der zweiten Trägerwand 25 aus weggeführt und weist in einer Längsrichtung E-E des zuletzt genannten Hohlträgerabschnitts gesehen zwei hintereinander angeordnete Hohlträger 29,30 auf, die abschnittsweise von einer dritten Trägerwand 31 und einer vierten Trägerwand 32 dargestellt werden. Die Trägerwände 31 und 32 sind durch Querstege 33,34,34' abgestützt, dergestalt, dass diese je Hohlträger 29 und 30 eine im Querschnitt sechseckige Wabenstruktur bilden. Nach Fig. 4 sind die Trägerwände 31 und 32 mit konvexen Wandabschnitten 35 und 36 versehen, so dass die Hohlträger 29,30 in dieser Ausführungsform einen viereckigen Querschnitt aufweisen. Außerdem erstreckt sich eine Mittellängsebene F-F des zweiten Hohlträgerabschnitts 19 im stumpfen Winkel γ von ca. 80° zu einer Geraden 37, entlang der die erste Trägerwand 20 des ersten Hohlträgerabschnitts 18 verläuft.

Der zweite Hohlträgerabschnitt 19 ist auf der dem Querträger 13 zugekehrten Seite 38 - Fig. 3.- mit im Winkel zueinander angeordneten Anschlussflanschen 39,40 versehen, die an Verbindungsflansche 41,42 einer Konsole 43 des besagten Querträgers anschließen. Zwischen den Anschlussflanschen 39 und den Verbindungsflanschen 41,42 sind geeignete Befestigungsmittel z.B. Schrauben 43 wirksam. Dabei sind der erste Hohlträgerabschnitt 18 und der zweite Hohlträgerabschnitt 19 in der Weise zu dem einen kreisförmigen Rohrquerschnitt aufweisenden Querträger 13 angeordnet, dass er durch Torsion zur Deformationsoptimierung der Kniestütze 12 beiträgt.

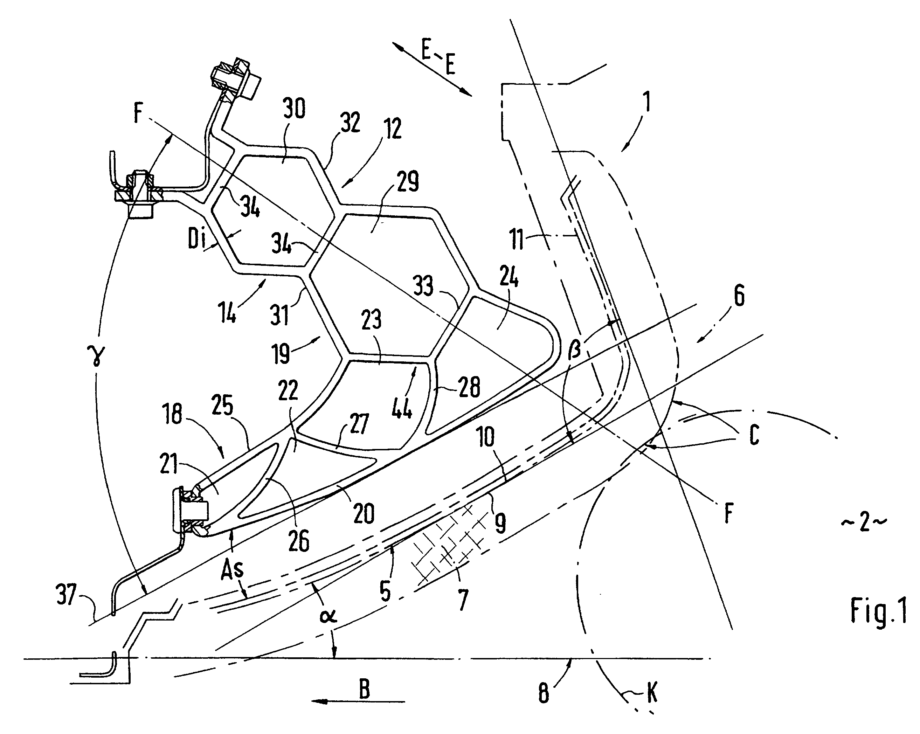

Der erste Hohlträgerabschnitt 18 und der zweite Hohlträgerabschnitt 19 sind im Ausführungsbeispiel als Strangpressprofil - Leichtmetall, Stahl, Kunststoff - aus einem Stück, und hergestellt, wobei die Trägerwände 20, 25, 31 und 32, die Stege 26,27 und 28 sowie die Querstege 33,34 eine konstante Dicke Di - Fig. 1 - aufweisen. Denkbar ist aber auch die Hohlträgerabschnitte 18 und 19 als separate Bauteile zu gestalten und diese dann bei 44 miteinander zu verbinden.

## Patentansprüche

1. Kniestütze für Kraftfahrzeuge, die innerhalb eines Aufbaus des Kraftfahrzeugs im Bereich einer Schalttafel (1) angeordnet ist und einen sich quer zur Fahrzeuglängsrichtung erstreckenden, an festen seitlichen Aufbaustrukturen gehaltenen und mit wenigstens einem Deformationselement (14,15,16,17) versehenen Querträger (13) aufweist, welches Deformationselement (14,15,16,17), mehrere Hohlträger umfasst und mittels einer Knien von Insassen des Kraftfahrzeugs zugekehrten Stützwand (9) verkleidet ist, **dadurch gekennzeichnet, dass** das Deformationselement (14, 15, 16, 17) einen ersten entlang der Stützwand (9) der Schalttafel (1) verlaufenden Hohlträgerabschnitt (18) und einen zweiten zusätzlichen Hohlträgerabschnitt (19) aufweist, der im Winkel (γ) zum ersten Hohlträgerabschnitt (18) angeordnet ist, wobei der zweite Hohlträgerabschnitt (19) am Querträger (13) befestigt ist und welcher erste Hohlträgerabschnitt (18) und zweite Hohlträgerabschnitt (19) jeweils wenigstens zwei erste Hohlträger (21, 22, 23, 24) bzw. zwei zweite Hohlträger (29, 31) aufweist.

2. Kniestütze nach Anspruch 1, **dadurch gekennzeichnet, dass** der Hohlträgerabschnitt eine erste Trägerwand (20) aufweist, die mit Abstand zur Stützwand (9) der Schalttafel (1) verläuft.

3. Kniestütze nach Anspruch 2, **dadurch gekennzeichnet, dass** die erste Trägerwand des ersten Hohlträgerabschnitts als Ebene oder konvexe Fläche ausgebildet ist und mit gleichem Abstand zur Stützwand (9) der Schalttafel (1) verläuft.

4. Kniestütze nach Anspruch 2, **dadurch gekennzeichnet, dass** beabstandet zur ersten Trägerwand (20) sich am ersten Hohlträgerabschnitt (18) eine zweite Trägerwand (25) erstreckt, wobei zwischen der ersten Trägerwand (20) und der zweiten Trägerwand (25) im Winkel zueinander verlaufende Stege (26, 27) angeordnet sind.

5. Kniestütze nach den Ansprüchen 1 und 4, **dadurch gekennzeichnet, dass** der zweite Hohlträgerabschnitt (19) von der zweiten Trägerwand (25) weggeführt ist, wobei die zweiten Hohlträger (29) abschnittsweise von einer dritten Trägerwand (31) und einer vierten Trägerwand (32) gebildet werden.

6. Kniestütze nach Anspruch 5, **dadurch gekennzeichnet, dass** die zweiten Hohlträger (29, 31) in einer Mittellängsebene (F-F) des zweiten Hohlträgerabschnitts (19) gesehen Querstege (33, 34) und die Trägerwände (31, 32) aufweisen.

7. Kniestütze nach Anspruch 6, **dadurch gekennzeichnet, dass** die Querstege (33, 34) und die Trägerwände (31, 32) eine sechseckige Wabenstruktur bilden.

8. Kniestütze nach Anspruch 5, **dadurch gekennzeichnet, dass** die Trägerwände (31, 32) im Bereich der Hohlträger (29, 31) konvexe Wandabschnitte aufweisen.

9. Kniestütze nach einem oder mehreren der vorangehenden Ansprüche, **dadurch gekennzeichnet, dass** der zweite Hohlträgerabschnitt (19) auf der dem Querträger (13) zugekehrten Seite Anschlussflansche (39, 40) aufweist, die mit Verbindungsflanschen (41, 42) des Querträgers (13) unter Zwischenschaltung geeigneter Befestigungsmittel in Lage gehalten werden.

10. Kniestütze nach einem oder mehreren der vorangehenden Ansprüche, **dadurch gekennzeichnet, dass** der erste Hohlträgerabschnitt (18) und der zweite Hohlträgerabschnitt (19) des Deformationselements (bspw. 14) aus einem Stück hergestellt sind.

11. Kniestütze nach einem oder mehreren der vorangehenden Ansprüche, **dadurch gekennzeichnet, dass** zumindest die Trägerwände (20, 25, 31, 32), die Stege (26, 27, 28) und die Querstege (33, 34) der Hohlträgerabschnitte (18, 19) eine konstante Dicke aufweisen.

12. Kniestütze nach einem oder mehreren der vorangehenden Ansprüche, **dadurch gekennzeichnet, dass** die Mittellängsebene (F-F) des zweiten Hohlträgerabschnitts (19) und die erste Trägerwand (20) im Winkel, vorzugsweise stumpfen Winkel (β) zueinander verlaufen.

13. Kniestütze nach einem oder mehreren der vorangehenden Ansprüche **dadurch gekennzeichnet, dass** die Hohlträgerabschnitte (18, 19) und der Querträger (13) in der Weise zueinander angeordnet sind, das der Querträger (13) durch Torsion zur Deformationsoptimierung der Kniestütze (12) beiträgt.

## Claims

1. A knee restraint for motor vehicles, which is arranged inside a body of the motor vehicle in the region of a dashboard (1) and has a transverse carrier (13) which extends transversely to the longitudinal direction of the vehicle and which is held on fixed lateral body structures and which is provided with at least one deformation element (14, 15, 16, 17), which deformation element (14, 15, 16, 17) comprises a plurality of hollow carriers and is covered by means of a support wall (9) facing the knees of passengers in the motor vehicle, **characterized in that** the deformation element (14, 15, 16, 17) has a first hollow-carrier portion (18) extending along the support wall (9) of the dashboard (1) and a second additional hollow-carrier portion (19) which is arranged at an angle (γ) to the first hollow-carrier portion (18), wherein the second hollow-carrier portion (19) is fastened to the transverse carrier (13), and which first hollow-carrier portion (18) and second hollow-carrier portion (19) each have at least two first hollow carriers (21, 22, 23, 24) and two second hollow carriers (29, 31) respectively.

2. A knee restraint according to Claim 1, **characterized in that** the hollow-carrier portion has a first carrier wall (20) which extends at a distance from the support wall (9) of the dashboard (1).

3. A knee restraint according to Claim 2, **characterized in that** the first carrier wall of the first hollow-carrier portion is constructed in the form of a level or convex face and extends at the same distance from the support wall (9) of the dashboard (1).

4. A knee restraint according to Claim 2, **characterized in that** a second carrier wall (25) extends on the first hollow-carrier portion (18) at a distance from the first carrier wall (20), wherein webs (26, 27) extending at an angle to each other are arranged between the first carrier wall (20) and the second carrier wall (25).

5. A knee restraint according to Claims 1 and 4, **characterized in that** the second hollow-carrier portion (19) extends away from the second carrier wall (25), wherein the second hollow carriers (29) are formed locally by a third carrier wall (31) and a fourth carrier wall (32).

6. A knee restraint according to Claim 5, **characterized in that**, as viewed in a central longitudinal plane (F-F) of the second hollow-carrier portion (19), the second hollow carriers (29, 31) comprise transverse webs (33, 34) and the carrier walls (31, 32).

7. A knee restraint according to Claim 6, **characterized in that** the transverse webs (33, 34) and the carrier walls (31, 32) form an hexagonal honeycomb structure.

8. A knee restraint according to Claim 5, **characterized in that** the carrier walls (31, 32) have convex wall portions in the region of the hollow carriers (29, 31).

9. A knee restraint according to one or more of the preceding Claims, **characterized in that**, on the side facing the transverse carrier (13), the second hollow-carrier portion (19) has attachment flanges (39, 40) which are held in position with connexion flanges (41, 42) of the transverse carrier (13) with the interposition of suitable fastening means.

10. A knee restraint according to one or more of the preceding Claims, **characterized in that** the first hollow-carrier portion (18) and the second hollow-carrier portion (19) of the deformation element (for example 14) are produced from one piece.

11. A knee restraint according to one or more of the preceding Claims, **characterized in that** at least the carrier walls (20, 25, 31, 32), the webs (26, 27, 28) and the transverse webs (33, 34) of the hollow-carrier portions (18, 19) have a constant thickness.

12. A knee restraint according to one or more of the preceding Claims, **characterized in that** the central longitudinal plane (F-F) of the second hollow-carrier portion (19) and the first carrier wall (20) extend at an angle, preferably an obtuse angle (β), with respect to each other.

13. A knee restraint according to one or more of the preceding Claims, **characterized in that** the hollow-carrier portions (18, 19) and the transverse carrier (13) are arranged with respect to one another in such a way that the transverse carrier (13) contributes to the optimization of the deformation of the knee restraint (12) by torsion.

## Revendications

1. Protège genoux pour véhicule automobile, qui est disposé à l'intérieur d'une carrosserie du véhicule dans la zone d'un tableau de bord (1) et comporte une poutre transversale (13) s'étendant transversalement à la direction longitudinale du véhicule, maintenue sur des structures latérales fixes de la carrosserie et pourvue d'au moins un élément de déformation (14, 15, 16, 17), lequel élément de déformation (14, 15, 16, 17) comprend plusieurs poutres creuses et est revêtu au moyen d'une paroi d'appui (9) tournée vers les genoux d'un passager du véhicule automobile, **caractérisé en ce que** l'élément de déformation (14, 15, 16, 17) comporte une première section de poutres creuses (18) s'étendant le long de la paroi d'appui (9) du tableau de bord (1) ainsi qu'une deuxième section de poutres creuses (19) supplémentaire qui est disposée suivant un angle (γ) par rapport à la première section de poutres creuses (18), la deuxième section de poutres creuses (19) étant fixée à la poutre transversale (13) et la première section de poutres creuses (18) ainsi que la deuxième section de poutres creuses (19) comportant chacune au moins deux premières poutres creuses (21, 22, 23, 24), respectivement deux deuxièmes poutres creuses (29, 31).

2. Protège genoux selon la revendication 1, **caractérisé en ce que** la section de poutres creuses comporte une première paroi portante (20) qui s'étend à distance de la paroi d'appui (9) du tableau de bord (1).

3. Protège genoux selon la revendication 2, **caractérisé en ce que** la première paroi portante de la première section de poutres creuses est réalisée comme plan ou surface convexe et s'étend à même distance de la paroi d'appui (9) du tableau de bord (1).

4. Protège genoux selon la revendication 2, **caractérisé en ce qu'**à distance de la première paroi portante (20) s'étend, sur la première section de poutres creuses (18), une deuxième paroi portante (25), des entretoises (26, 27) s'étendant suivant un angle entre elles étant disposées entre la première paroi portante (20) et la deuxième paroi portante (25).

5. Protège genoux selon les revendications 1 et 4, **caractérisé en ce que** la deuxième section de poutres creuses (19) part de la deuxième paroi portante (25), la deuxième poutre creuse (29) étant formée par endroits par une troisième paroi portante (31) et une quatrième paroi portante (32).

6. Protège genoux selon la revendication 5, **caractérisé en ce que** les deuxièmes poutres creuses (29, 31) comportent, vues dans un plan médian longitudinal (F-F) de la deuxième section de poutres creuses (19), des entretoises transversales (33, 34) et les parois portantes (31, 32).

7. Protège genoux selon la revendication 6, **caractérisé en ce que** les entretoises transversales (33, 34) et les parois portantes (31, 32) forment une structure en nid d'abeille hexagonale.

8. Protège genoux selon la revendication 5, **caractérisé en ce que** les parois portantes (31, 32) comportent des sections de paroi convexes dans la zone des poutres creuses (29, 31).

9. Protège genoux selon une ou plusieurs des revendications précédentes, **caractérisé en ce que** la deuxième section de poutres creuses (19) comporte, sur le côté tourné vers la poutre transversale (13), des brides de raccordement (39, 40) qui sont immobilisées avec des brides de liaison (41, 42) de la poutre transversale (13), avec interposition de moyens de fixation appropriés.

10. Protège genoux selon une ou plusieurs des revendications précédentes, **caractérisé en ce que** la première section de poutres creuses (18) et la deuxième section de poutres creuses (19) de l'élément de déformation (par ex. 14) sont fabriquées d'une seule pièce.

11. Protège genoux selon une ou plusieurs des revendications précédentes, **caractérisé en ce qu'**au moins les parois portantes (20, 25, 31, 32), les entretoises (26, 27, 28) et les entretoises transversales (33, 34) des sections de poutres creuses (18, 19) présentent une épaisseur constante.

12. Protège genoux selon une ou plusieurs des revendications précédentes, **caractérisé en ce que** le plan médian longitudinal (F-F) de la deuxième section de poutres creuses (19) et la première paroi portante (20) s'étendent en formant un angle entre elles, de préférence un angle obtus (β).

13. Protège genoux selon une ou plusieurs des revendications précédentes, **caractérisé en ce que** les sections de poutres creuses (18, 19) et la poutre transversale (13) sont disposées les unes par rapport à l'autre de manière que la poutre transversale (13) contribue par torsion à l'optimisation de la déformation de l'appui pour genoux (12).
